(19) Europäisches Patentamt
European Patent Office
Office européen des brevets

(11) **EP 3 006 538 B1**

(12) **EUROPEAN PATENT SPECIFICATION**

(45) Date of publication and mention
of the grant of the patent:
**02.01.2019 Bulletin 2019/01**

(51) Int Cl.:
*C09K 8/60* *(2006.01)*      *B65G 5/00* *(2006.01)*
*C09K 8/594* *(2006.01)*     *E21B 41/00* *(2006.01)*
*E21B 43/16* *(2006.01)*

(21) Application number: **15275214.3**

(22) Date of filing: **09.10.2015**

(54) **METHOD FOR IMPROVING CO2 INJECTIVITY BY REDUCING IRREDUCIBLE WATER SATURATION AROUND WELLBORE IN UNDERGROUND GAS STORAGE LAYER**

VERFAHREN ZUR VERBESSERUNG DER CO2-INJEKTIVITÄT DURCH REDUZIERUNG VON UNÜBERWINDLICHER WASSERSÄTTIGUNG UM EIN BOHRLOCH IN UNTERIRDISCHER GASLAGERUNGSSCHICHT

PROCÉDÉ DESTINÉ À AMÉLIORER L'INJECTIVITÉ DE CO2 PAR RÉDUCTION DE SATURATION EN EAU IRRÉDUCTIBLE AUTOUR DE PUITS DE FORAGE DANS LA COUCHE DE STOCKAGE DE GAZ SOUTERRAIN

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.10.2014 KR 20140136771**

(43) Date of publication of application:
**13.04.2016 Bulletin 2016/15**

(73) Proprietor: **Korea Institute of Geoscience and Mineral
Resources (KIGAM)
Daejeon 305-350 (KR)**

(72) Inventors:
• **Park, Yong-Chan**
  **302-768 Daejeon (KR)**
• **Lee, Taehun**
  **138-120 Seoul (KR)**
• **Park, Kwon Gyu**
  **305-707 Daejeon (KR)**
• **Lee, Seungwoo**
  **305-350 Daejeon (KR)**

(74) Representative: **Potter Clarkson LLP
The Belgrave Centre
Talbot Street
Nottingham NG1 5GG (GB)**

(56) References cited:
**WO-A1-00/26504      US-A- 3 138 204
US-A- 4 653 583      US-A1- 2004 157 749**

**Description**

**BACKGROUND OF THE INVENTION**

The present invention disclosed herein relates to an underground gas storage technology for storing carbon dioxide by using an oilfield, a gas field, or an aquifer, which has been developed in a deep portion of the land or subseabed, and more particularly, to a method for improving $CO_2$ injectivity in an underground aquifer.

While greenhouse gases that cause global warming are diverse, such as methane, Freon gas, and carbon dioxide, carbon dioxide accounts for about 80% in the whole greenhouse gases. Also, since carbon dioxide is a controllable gas, the greenhouse gas problem may be focused on carbon dioxide.

Carbon Capture & Storage (CCS) technology has been recently viewed with optimism as a technology for reducing carbon dioxide. According to International Energy Agency (IEA), by the year 2050, about 9.2 billion tons (that corresponds to about 19% of the total amount of carbon dioxide to be reduced per year) may need to be processed through the CCS technology. While there are only about four CCS projects in operation around the world that have been substantiated and are commercial-scale projects, about 300 projects are being currently planned, and it is estimated that 3,500 or more projects will be needed in 2050.

The underground storage technology that is a field for CCS is a technology for semi-permanently storing carbon dioxide collected from power plants and the like in the deep portion of the land or subseabed. Here, oil fields, gas fields, aquifers, and the like may serve as main reservoirs according to the geological environments. The most important conditions for determining the reservoir are that the reservoir has to be located at a deep portion of at least 800 meters or more, the reservoir rock (a storage layer) has to have high porosity and permeability, and an impermeable layer (an upper cap rock) has to exist at the top of the reservoir rock so that injected carbon dioxide does not leak above the ground.

To successfully operate a CCS, it is important to secure a large-scale deep storage layer in which a large amount of gas is capable of being stored. All of the securing of the large-scale storage layer and carbon dioxide injectivity may have some connection with irreducible water saturation.

That is, the large-scale storage layer represents that a space in which carbon dioxide is capable of being stored is large. For this, the storage layer itself has to have a large volume, and also, a rock forming the storage layer has to have large porosity. Also, irreducible water saturation within a pore has to be low. Even though carbon dioxide is continuously injected into the pore of the rock forming the storage layer, some water may remain without being completely saturated by the carbon dioxide. The remaining water that is not completely saturated is called irreducible water saturation. Since high irreducible water saturation represents a space in which carbon dioxide is filled is small, an actual storage space may be reduced. Also, the permeability within the storage layer is concerned with saturation. For example, the more the saturation of carbon dioxide in a pore increases, the more the permeability of carbon dioxide is provided. In an inverse case, the permeability may be reduced. If the irreducible water saturation increases, the saturation of carbon dioxide may relatively decrease to cause reduction in permeability of carbon dioxide. If the permeability decreases, the injectivity may decrease. This is undesirable for economic feasibility in the whole CCS business. As a result, all of the securing of the large-scale storage layer and the improvement of the carbon dioxide injectivity may be largely concerned with the irreducible water saturation of the pores within the storage layer.

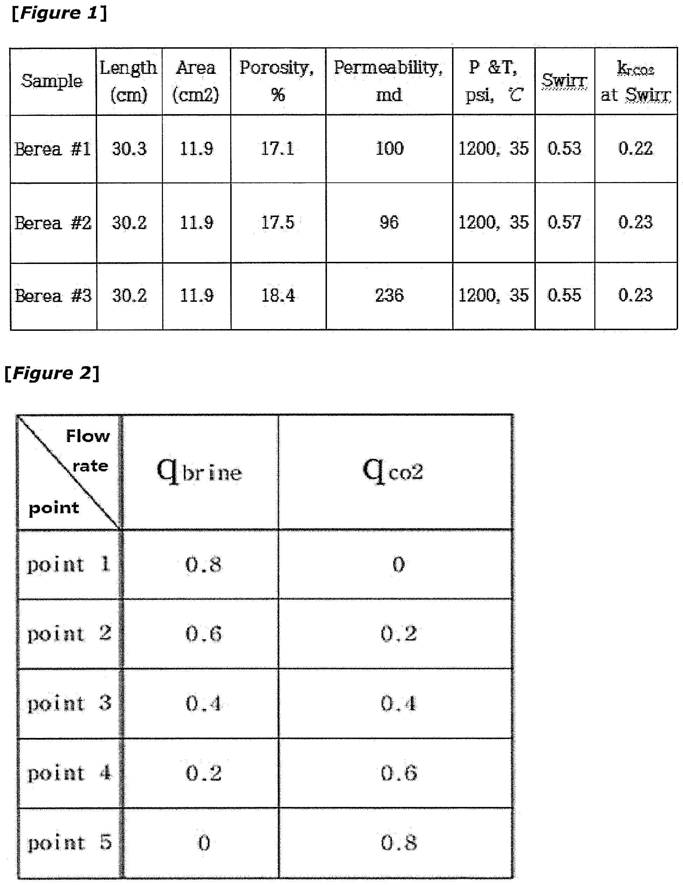

The aquifer has a water-wet property. Thus, it is reported that the aquifer has about 50% of irreducible water saturation and low relative permeability. Also, in a test with respect to a rock core, which is performed by the inventor, as shown in Table of FIG. 1, the rock core may have very high irreducible water saturation and low relative permeability ($krCO_2$).

Document WO 00/26504 discloses a method for reducing water saturation in a subterranean well-region in order to increase the injectivity rate of an non-aqueous fluid into said formation.Said method comprising the steps of : selecting a non-aqueous primary solution such as carbon dioxide ; selecting a secondary fluid from a group comprising, amongst others, carbon dioxide, polar hydrocarbons, alcohols, ketones ; injecting firstly a surfactant solution and the secondary fluid ; injecting secondly the non-aqueous primary solution.

As described above, if the irreducible water saturation of the storage layer is high, the storage layer may be reduced in capacity, and also, the relative permeability may be reduced to cause a negative effect on the carbon dioxide injectivity.

**SUMMARY OF THE INVENTION**

The present invention provides a method for improving $CO_2$ injectivity in the whole storage layer by reducing irreducible water saturation around a wellbore, into which carbon dioxide is injected, in a storage layer.

The present invention provides a method for improving carbon dioxide injectivity of an underground gas storage layer, the method consisting of: performing a process (a) of injecting a reducing agent consisting of a material that is miscible with carbon dioxide and water through a wellbore connected to the underground gas storage layer composed of a water-permeable rock material, the reducing agent consisting of one of acetone, methanol, ethanol, and acetic acid; and performing a process (b) of injecting carbon dioxide into the storage layer after the process (a), wherein, since the carbon dioxide is injected in the process (b), the reducing agent and water, which fill a pore of the storage layer, are discharged together after the process (a) is completely performed to reduce the irreducible water saturation around the wellbore, thereby improving the carbon dioxide injectivity of the storage layer.

The reducing agent may be adjusted in injection amount so that the reducing agent is injected only within a predetermined radius with respect to the wellbore. The reducing agent may not have to be spread to the whole storage layer because it is not economical.

While the carbon dioxide is injected in the process (b), the reducing agent may be re-injected.

A separate extraction well connected up to the storage layer may be drilled around the wellbore to collect the reducing agent and the water, which are discharged from the pore of the storage layer in the process (b), through the wellbore.

The reducing agent and the water, which are discharged through the wellbore, may be separated from each other to permit reuse of the reducing agent.

## BRIEF DESCRIPTION OF THE DRAWINGS

The accompanying drawings are included to provide a further understanding of the present invention, and are incorporated in and constitute a part of this specification. The drawings illustrate exemplary embodiments of the present invention and, together with the description, serve to explain principles of the present invention. In the drawings:

FIG. 1 is a table showing results of a relative permeability test with respect to a rock core sample;
FIG. 2 is a table showing a content ratio of water and carbon dioxide, which are injected when the relative permeability is measured;
FIG. 3 is a graph illustrating saturation of carbon dioxide and relative permeability of water and carbon dioxide when fluids are injected into the rock core sample under conditions of FIG. 2;
FIG. 4 is a view for explaining a method for improving injectivity in an underground gas storage layer according to an embodiment of the present invention;
FIG. 5 is a graph illustrating relative permeability of $CO_2$ and water when the carbon dioxide is injected into an aquifer composed of sandstone;
FIG. 6 is a graph illustrating relative permeability that varies when a reducing agent is preprocessed in the aquifer of FIG. 5;

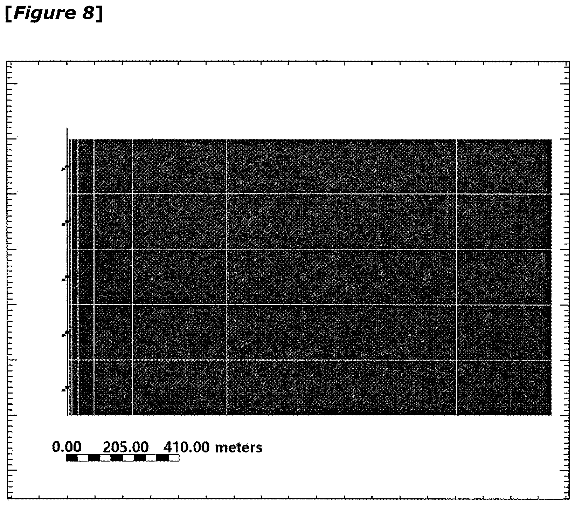

FIGS. 7 and 8 are plan and vertical cross-sectional views of a cell system that is utilized for a reservoir simulation;
FIG. 9 is a view illustrating a cell structure around a wellbore (here, a blue color represents a typical relative permeability curve, and a red cell represents minimized irreducible water saturation);
FIG. 10 is a graph illustrating carbon dioxide accumulation as the simulated result; and
FIG. 11 is a graph illustrating the carbon dioxide accumulation and improvement when carbon dioxide is injected for a long time.

## DETAILED DESCRIPTION OF PREFERRED EMBODIMENTS

Preferred embodiments of the present invention will be described below in more detail with reference to the accompanying drawings. The present invention may, however, be embodied in different forms and should not be constructed as limited to the embodiments set forth herein. Rather, these embodiments are provided so that this disclosure will be thorough and complete, and will fully convey the scope of the present invention to those skilled in the art.

The present invention relates to a method for improving carbon dioxide collection and injectivity in an underground storage system (hereinafter, referred to as a "CCS"). To successively operate the CCS, as described above, it is important to secure a large-scale storage layer and smooth injectivity. Also, all of the capacity and injectivity of the storage layer may be concerned with irreducible water saturation of the storage layer and relative permeability of the carbon dioxide. However, the increase in capacity of the storage layer is not a major interest. That is, the present invention focuses on improvement in injectivity of the storage layer.

First, for fundamental comprehension of the present invention, the irreducible water saturation and the relative permeability will be described.

Permeability of a fluid within a rock (reservoir rock) is classified into absolute permeability, effective permeability, and relative permeability. The absolute permeability represents flowability when a single phase fluid flows through a rock, the effective permeability represents flowability of each component when multi-phase fluids such as water and oil or water and gas flow together through a rock, and the relative permeability represents a ratio of the effective permeability of each component to the absolute permeability.

If only a single phase fluid exists in the reservoir rock, a flow of the fluid may be expressed as only the absolute permeability. However, since at least two phase fluids exist in most reservoir rocks and have an influence on flows therebetween, the relative permeability for expressing flows of the multi-phase fluids may be positively necessary.

The relative permeability is proportional to saturation of a fluid within the reservoir rock, and the saturation of the fluid (gas) is largely affected by irreducible water saturation (when it is assumed that water and gas flows).

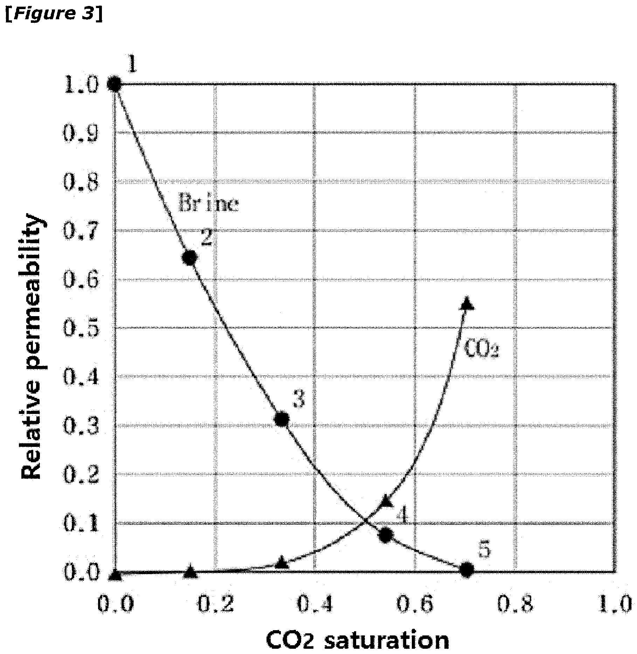

A test for measuring irreducible water saturation and relative permeability of a rock core sample in a storage layer when it is assumed that carbon dioxide and water flow in the storage layer will be described with reference to tables of FIGS. 2 and 3. FIG. 2 is a table showing a content ratio of water and carbon dioxide, which are injected when the relative permeability is measured, and FIG. 3 is a graph illustrating saturation of carbon dioxide and relative permeability of water and carbon dioxide when fluids are injected into the rock core sample under conditions of FIG. 2.

According to the test, the core sample is dried and heated first, and a negative pressure is applied to the core sample. Then, in a state in which a pore within the core sample becomes a complete vacuum state, the pore is saturated by water (for example, brine). Thus, the pore may be fully filled with the water. In this state, as shown in Table of FIG. 2, fluids are injected into the core sample while a relative injection amount of the water and the carbon dioxide changes from a point 1 to a point 5 at a predetermined time interval. That is, about 0.8 cc of only the water was injected at the point 1 under the condition in which the core sample is completely saturated with the water, and the carbon dioxide was not injected. Also, the carbon dioxide was injected from a point 2 to a point 4 while gradually increasing in amount, and only the carbon dioxide was injected at the point 5 without injecting the water. Also, the relative permeability of each fluid was measured at each point, and the saturation of the carbon dioxide was measured to obtain the relative permeability graph of FIG. 3. Although the saturation of the carbon dioxide is measured only until now, a pore of the core sample is saturated by the carbon dioxide and the water. Thus, if the saturation of the carbon dioxide within the core sample is 0.2, on the contrary, the saturation of the water may be 0.8. Thus, in the graph of FIG. 3, an X-axis coordinate may be defined for any one of the carbon dioxide and the water. However, the saturation of the fluid having relatively high wettability of the two fluids may be generally defined as the X-axis coordinate.

Referring to the graph of FIG. 3, when only the water is injected without injecting the carbon dioxide in the state where the core sample becomes the vacuum state, the relative permeability of the water is 1. However, if the carbon dioxide increases in amount, the relative permeability of the carbon dioxide may gradually increase, and the relative permeability of the water may gradually decrease.

Since only the carbon dioxide is injected at the point 5 without injecting the water, on the contrary to the point 1, the permeability of the carbon dioxide has to be 1, the permeability of the water has to be 0, and the saturation of the carbon dioxide within the core sample has to be 1 at the point 5. However, as shown in the graph of FIG. 3, the saturation of the carbon dioxide within the core sample is about 0.7, but not 1.

That is, even though only the carbon dioxide is continuously injected without injecting the water, it is seen that a minimally remaining amount of water that adheres and thus is not discharged any longer exists in the pore within the core sample. The saturation of the minimally remaining water is called irreducible water saturation.

The same is done for the point 1. That is, since the pore within the core sample artificially becomes the complete vacuum state through an initialization process in this test, and the water is filled into the pore, the saturation of the water is 1. However, when only the water is injected finally with 100% at the point 5 through a process in which the water content inversely increases again, and the amount of carbon dioxide decreases, the saturation of the water within the core sample is less than 1 without returning to the original condition at the point 1. That is, although only the water is injected with 100%, a minimum amount of carbon dioxide that adheres to the core sample and thus is not discharged remains. That is, when the multi-phase fluids flow in the reservoir that is in natural condition, a minimally remaining amount of each fluid exists. Here, this may be called irreducible water saturation.

The irreducible water saturation may substantially carry an important meaning in the CCS. That is, when the carbon dioxide is stored in the CCS, if the irreducible water saturation of the reservoir is low, injectability (capacity of the storage layer) of the carbon dioxide may increase.

Also, if the irreducible water saturation is low, as illustrated in the graph of FIG.3, the saturation of the carbon dioxide may increase, and thus, the relative permeability of the carbon dioxide may increase. The increase of the relative permeability may improve the injectivity of the carbon dioxide. An injectivity index II of the carbon dioxide in the storage layer is determined by the relative permeability as following Equation 1.

$$II = q/\Delta p = \frac{k_{CO_2} h}{141.2\, \mu_{CO_2} B_{CO_2} (\ln r_e/r_w + S)} \qquad \dots \text{Equation (1)}$$

Where $kCO_2$ represents permeability with respect to a $CO_2$ phase and is expressed by multiplying the absolute permeability with the relative permeability. Also, h represents a thickness of the wellbore, $\mu$ represents viscosity, $r_e$ and

$r_w$ represent radii of a boundary and the wellbore, and S represents a skin factor. In Equation 1, the injectivity has a unit of bbl/psi.

The $kCO_2$ may be expressed again as $k \cdot kCO_2$. Here, since k represents a physical property of a rock as the absolute permeability, if hydraulic fracturing is not performed, the absolute permeability is not improved. Thus, to improve the injectivity, the relative permeability ($kCO_2$) of the carbon dioxide has to increase.

In summary, to improve the injectivity of the carbon dioxide in the CCS, the irreducible water saturation of the storage layer has to be reduced. According to the present invention, the irreducible water saturation of the storage layer may be reduced to more economically operate the CCS. Here, the important thing is to reduce only the irreducible water saturation around the wellbore, but not reduce the irreducible water saturation in the whole storage layer. The irreducible water saturation around the wellbore in the storage layer may be reduced to improve the injectivity of the carbon dioxide in the whole storage layer.

That is, since the carbon dioxide is three-dimensionally and radially spread at a point (around the wellbore) at which the carbon dioxide is injected, when the permeability around the injection point is improved, the permeability in the whole storage layer may be improved.

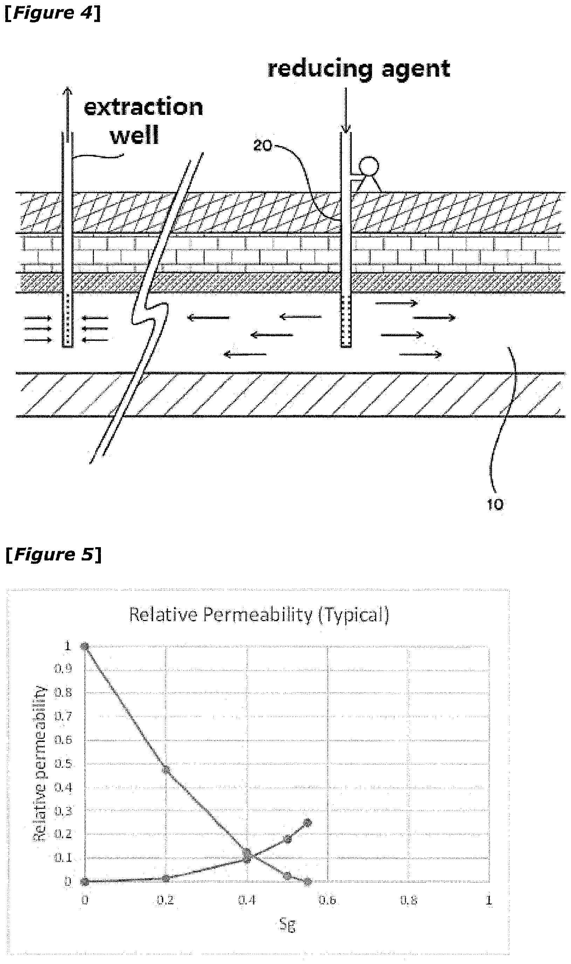

FIG. 4 is a view for explaining a method for improving the injectivity in the underground gas storage layer according to an embodiment of the present invention.

Referring to FIG. 4, a wellbore 20 is installed from the ground to a storage layer 10 that is disposed at a deep underground portion. The storage layer 10 is composed of a porous rock and has very large porosity. According to the present invention, a reducing agent that is capable of reducing irreducible water saturation of the storage layer 10 is injected at a high pressure through the wellbore 20. In a state in which a pore of the storage layer 10 is filled with water, the reducing agent is injected into the pore. As a result, a portion of the water is pushed from the pore, and then, the reducing agent is filled into the pore. The reducing agent is radially diffused around the wellbore along the pore. As described above, when the reducing agent is injected, the pore within the storage layer 10 around the wellbore 20 may be saturated by the reducing agent and the water.

In this state, when carbon dioxide is injected through the wellbore 20, the reducing agent and the water are discharged together from the pore, and then, the carbon dioxide is filled into the pore. Here, the emphasis of this process is the irreducible water saturation. When the carbon dioxide is injected in the state in which the pore is saturated by the water without previously injecting the reducing agent, since the irreducible water saturation in an aquifer is about 50%, carbon dioxide saturation in the pore may be about 50%. However, when the reducing agent is injected first, more amount of water within the pore may be discharged to significantly reduce the irreducible water saturation. That is, the saturation of the carbon dioxide may be significantly above 50%. This may be caused by an effect of the reducing agent.

According to the present invention, reducing agent (mixing agent) consists of one of acetone, methanol, ethanol, and acetic acid. The mixing agent may have a miscible property that is well mixed with all of the carbon dioxide and the water. The mixing agent may be chemically well mixed with all of the water and the carbon dioxide. When the carbon dioxide is injected in the state in which the mixing agent is coupled (mixed) to the water within the pore, the mixing agent may be coupled to the carbon dioxide. When the carbon dioxide is continuously injected and diffused, the carbon dioxide together with the reducing agent may push the water out.

The mixing agent may have an effect similar to that of soap or detergent that is a kind of surfactant. That is, since the soap includes all of hydrophilic and lyphophilic portions, when the hand is washed by using water in a state in which oil stain is coupled to the hydrophilic portion, the hydrophilic portion may be coupled to the water to wash all of the soap and the oil stain together with the water.

As described above, when the reducing agent is used, the water within the pore may be continuously discharged to reduce more of the irreducible water saturation within the pore when compared to a case in which the reducing agent is not preprocessed. Since the irreducible water saturation within the pore decreases, the saturation and relative permeability of the carbon dioxide may relatively increase. Thus, the injectivity of the carbon dioxide may be improved.

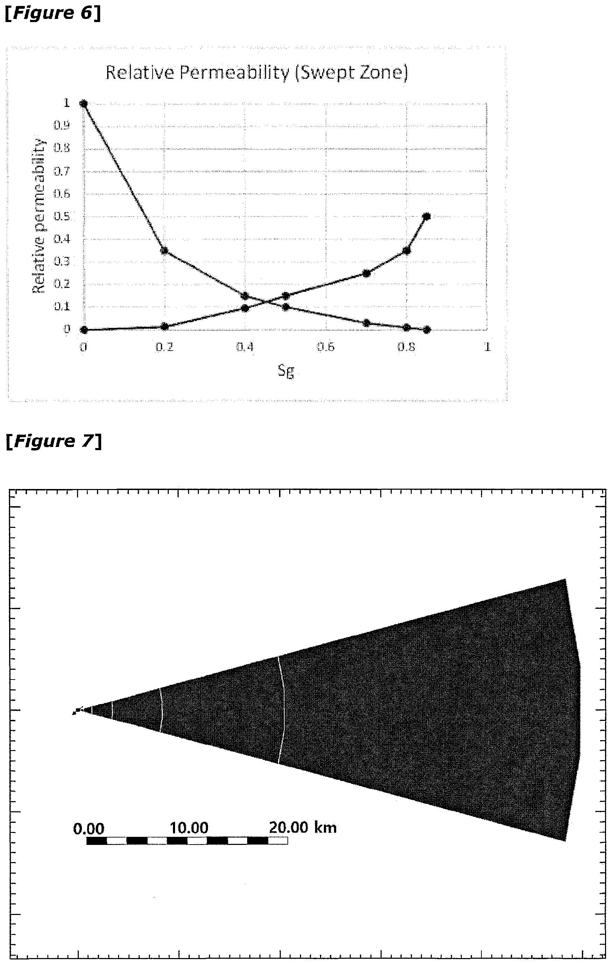

When this process is expressed by using the relative permeability graph, graphs of FIGS. 5 and 6 may be obtained. FIG. 5 is a graph illustrating relative permeability of $CO_2$ and water when the carbon dioxide is injected into an aquifer composed of sandstone, and FIG. 6 is a graph illustrating relative permeability that varies when a reducing agent is preprocessed in the aquifer of FIG. 5. In the graph of FIG. 5, although the saturation of the carbon dioxide is less than about 60%, the permeability of the carbon dioxide is less than 0.3. However, in the graph of FIG. 6 in which the reducing agent is preprocessed, the saturation of the carbon dioxide within the pore exceeds about 80%, and the permeability of the carbon dioxide increases up to 0.5.

According to the present invention, since the reducing agent is injected into only the surroundings of the wellbore 20 in the storage layer 10, an amount of reducing agent to be injected may be predetermined, or the injecting agent has to be injected into only an area within a predetermined radius with respect to the wellbore through a method in which the reducing agent is injected for a predetermined time at a predetermined pressure.

Also, according to another embodiment of the present disclosure a separate reducing agent extraction well may be provided around the wellbore. That is, the extraction well may be provided around the wellbore, and the reducing agent is exclusively injected into the wellbore. Then, the carbon dioxide may be injected to discharge the reducing agent and the water from the wellbore. Alternatively, while the reducing agent and the carbon dioxide are injected together through the wellbore, the water discharged from the pore of the storage layer together with the reducing agent and the carbon dioxide may be discharged from the wellbore. In the state in which the irreducible water saturation is reduced through the above-described process, only the carbon dioxide may be injected to improve the injectivity. Also, in the fluid collected through the wellbore, the reducing agent, the water, and the carbon dioxide may be separated from each other, and the reducing agent may be reused.

Also, according to an embodiment of the present invention, while the carbon dioxide is injected, the reducing agent may be intermittently or periodically re-injected to reduce the irreducible water saturation around the wellbore.

The research staff performed a reservoir simulation to verify whether the injectivity of the carbon dioxide is improved through the reduction in the irreducible water saturation around the storage layer wellbore as described above. Here, Computer Modeling Group's GEM simulator (2013 version) in Canada may be used as a model.

Since the interest of the prevent invention is to determine an effect in injectivity of the whole field through the improvement in relative permeability around the wellbore, a radial coordinate system was assumed. That is, as illustrated in FIG. 7, only a portion corresponding to an angle of 30° that is 1/12 of 360° was used for the test. Here, total 75 cells in which a region of about 50 km in an r direction is divided into 15 cells, and a region of about 50 m in a vertical direction is divided into 5 cells were used. A boundary condition was set to a no-flow condition, and an initial condition was set to a condition in which the uppermost layer is defined with a depth of about 1,000 m at a pressure of about 110 atmosphere.

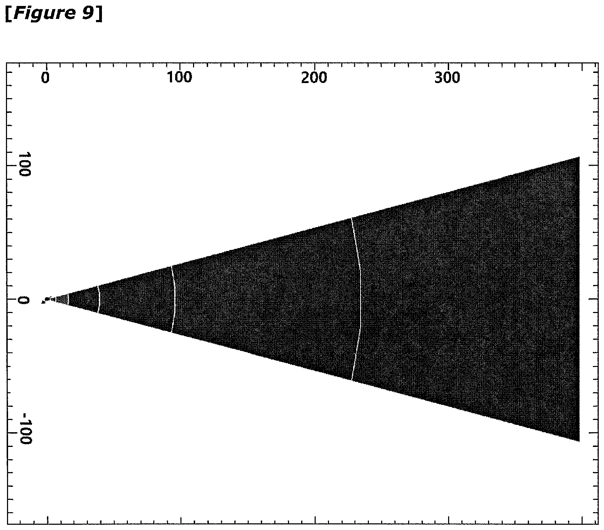

To verify the present invention, the cells around the wellbore are densely arranged so that the first cell has a size of 0.11 m, the second cell has a size of 0.27 m, and the third cell has a size of 0.65 m in the r direction. FIG. 9 illustrates a configuration of the cells around the wellbore. In FIG. 9, a blue color represents a typical relative permeability curve, and a red cell represents minimized irreducible water saturation.

For comparison, a simulation of only existing relatively permeability as a baseline was performed. Then, it was assumed that the irreducible water saturation decreases, and the $CO_2$ relative permeability increases to radius sizes of 0.45, 1.1, and 16 meters from the wellbore. In all of the cases, while the pressure of the wellbore is maintained at about 130 atmosphere, only the region in which the relative permeability is improved did vary in size.

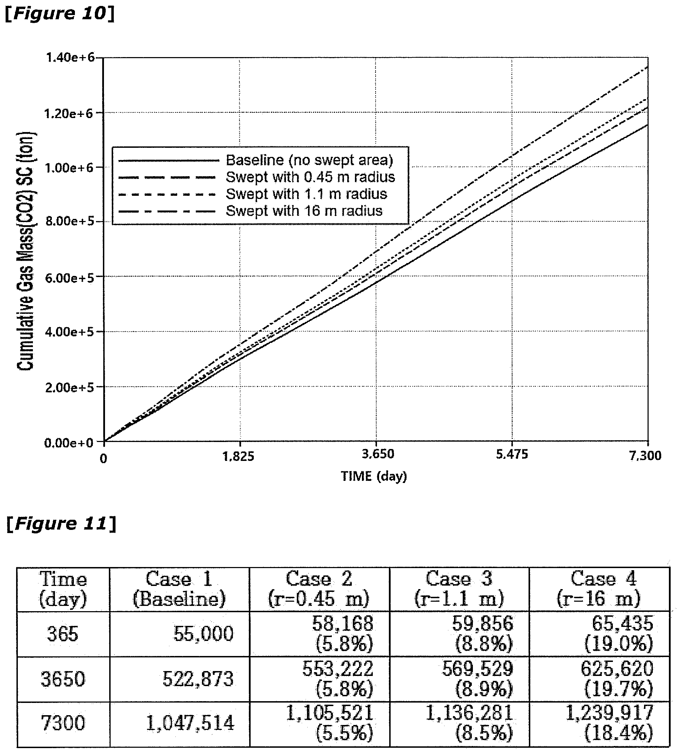

The measured results are shown in the graph of FIG. 10. It is seen that a distinct difference is confirmed in only the case of the radius region of 0.45 m. Also, as shown in the table (a ton unit) of FIG. 11, when comparing a cumulative injection amount of carbon dioxide at time points of about 1 year, about 10 years, and about 20 years, it is seen that the cumulative injection amount of carbon dioxide is improved from minimum 5.5% to maximum 19.7%.

The present invention may have the advantage in improving the $CO_2$ injectivity in the whole storage layer by reducing the irreducible water saturation around the wellbore in the $CO_2$ storage layer to improve the $CO_2$ relative permeability around the wellbore.

The description of the present invention is intended to be illustrative, and those with ordinary skill in the technical field of the present invention pertains will be understood that the present invention can be carried out in other specific forms without changing the technical idea or essential features. Hence, the real protective scope of the present invention shall be determined by the technical scope of the accompanying claims.

## Claims

1. A method for improving carbon dioxide injectivity of an underground gas storage layer, the method consisting of:

   performing a process (a) of injecting a reducing agent consisting of a material that is miscible with carbon dioxide and water through a wellbore connected to the underground gas storage layer composed of water-permeable rock material, the reducing agent consisting of one of acetone, methanol, ethanol, and acetic acid; and performing a process (b) of injecting carbon dioxide into the storage layer after the process (a),

   wherein, since the carbon dioxide is injected in the process (b), the reducing agent and water, which fill a pore of the storage layer, are discharged together after the process (a) is completely performed to reduce the irreducible water saturation around the wellbore, thereby improving the carbon dioxide injectivity of the storage layer.

2. The method of claim 1, wherein the reducing agent is adjusted in injection amount so that the reducing agent is injected only within a predetermined radius with respect to the wellbore.

3. The method of claim 1, wherein, while the carbon dioxide is injected in the process (b), the reducing agent is re-injected.

4. The method of claim 1, wherein a separate extraction well connected up to the storage layer is drilled around the wellbore to collect the reducing agent and the water, which are discharged from the pore of the storage layer in the process (b), through the wellbore.

5. The method of claim 4, wherein the reducing agent and the water, which are discharged through the wellbore, are separated from each other to reuse the reducing agent.

**Patentansprüche**

1. Verfahren zum Verbessern von Kohlendioxideinspritzbarkeit einer unterirdischen Gasspeicherschicht, wobei das Verfahren aus Folgendem besteht:

Durchführen eines Vorgangs (a) zum Einspritzen eines Reduktionsmittels, bestehend aus einem Material, das mit Kohlendioxid und Wasser mischbar ist, durch ein Bohrloch, das mit der unterirdischen Gasspeicherschicht verbunden ist, die aus wasserdurchlässigem Gesteinsmaterial zusammengesetzt ist, wobei das Reduktionsmittel aus Aceton, Methanol, Ethanol oder Essigsäure besteht; und
Durchführen eines Vorgangs (b) zum Einspritzen von Kohlendioxid in die Speicherschicht nach dem Vorgang (a),

wobei, da das Kohlendioxid in dem Vorgang (b) eingespritzt wird, das Reduktionsmittel und Wasser, die eine Pore der Speicherschicht füllen, zusammen abgeführt werden, nachdem der Vorgang (a) vollständig durchgeführt wurde, um die nicht reduzierbare Wassersättigung um das Bohrloch zu reduzieren, wodurch die Kohlendioxideinspritzbarkeit der Speicherschicht verbessert wird.

2. Verfahren nach Anspruch 1, wobei das Reduktionsmittel in der Einspritzmenge derart angepasst wird, dass das Reduktionsmittel nur innerhalb eines vorgegebenen Radius bezogen auf das Bohrloch eingespritzt wird.

3. Verfahren nach Anspruch 1, wobei, während das Kohlendioxid im Vorgang (b) eingespritzt wird, das Reduktionsmittel erneut eingespritzt wird.

4. Verfahren nach Anspruch 1, wobei ein getrenntes Extraktionsloch, das bis zur Speicherschicht verbunden ist, um das Bohrloch herum gebohrt wird, um das Rektionsmittel und das Wasser zu sammeln, die von der Pore der Speicherschicht im Vorgang (b) durch das Bohrloch abgeführt werden.

5. Verfahren nach Anspruch 4, wobei das Reduktionsmittel und das Wasser, die durch das Bohrloch abgeführt werden, voneinander getrennt werden, um das Reduktionsmittel wieder zu verwenden.

**Revendications**

1. Procédé pour améliorer l'injectivité de dioxyde de carbone d'une couche de stockage souterrain de gaz, le procédé consistant à :

réaliser un processus (a) d'injection d'un agent réducteur consistant en un matériau qui est miscible avec le dioxyde de carbone et de l'eau à travers un puits de forage raccordé à la couche de stockage souterrain de gaz composée d'un matériau de roche perméable à l'eau, l'agent réducteur consistant en l'un de l'acétone, du méthanol, de l'éthanol et de l'acide acétique ; et
réaliser un processus (b) d'injection de dioxyde de carbone dans la couche de stockage après le processus (a),

dans lequel, à partir de l'injection du dioxyde de carbone dans le processus (b), l'agent réducteur et l'eau, qui remplissent un pore de la couche de stockage, sont évacués conjointement après que le processus (a) est complètement réalisé pour réduire la saturation en eau irréductible autour du puits de forage, améliorant ainsi l'injectivité du dioxyde de carbone de la couche de stockage.

2. Procédé selon la revendication 1, dans lequel l'agent réducteur est ajusté en termes de quantité d'injection pour que l'agent réducteur ne soit injecté que dans un rayon prédéterminé par rapport au puits de forage.

3. Procédé selon la revendication 1, dans lequel, pendant que le dioxyde de carbone est injecté dans le processus (b), l'agent réducteur est réinjecté.

4. Procédé selon la revendication 1, dans lequel un puits d'extraction séparé raccordé jusqu'à la couche de stockage est foré autour du puits de forage pour collecter l'agent réducteur et l'eau, qui sont évacués du pore de la couche de stockage dans le processus (b), à travers le puits de forage.

5. Procédé selon la revendication 4, dans lequel l'agent réducteur et l'eau, qui sont évacués à travers le puits de forage, sont séparés l'un de l'autre pour réutiliser l'agent réducteur.

[*Figure 1*]

| Sample | Length (cm) | Area (cm2) | Porosity, % | Permeability, md | P &T, psi, ℃ | Swirr | $k_{rco2}$ at Swirr |
|---|---|---|---|---|---|---|---|
| Berea #1 | 30.3 | 11.9 | 17.1 | 100 | 1200, 35 | 0.53 | 0.22 |
| Berea #2 | 30.2 | 11.9 | 17.5 | 96 | 1200, 35 | 0.57 | 0.23 |
| Berea #3 | 30.2 | 11.9 | 18.4 | 236 | 1200, 35 | 0.55 | 0.23 |

[*Figure 2*]

| Flow rate / point | $q_{brine}$ | $q_{co2}$ |
|---|---|---|
| point 1 | 0.8 | 0 |
| point 2 | 0.6 | 0.2 |
| point 3 | 0.4 | 0.4 |
| point 4 | 0.2 | 0.6 |
| point 5 | 0 | 0.8 |

[*Figure 3*]

[*Figure 4*]

[*Figure 5*]

**[*Figure 6*]**

**[*Figure 7*]**

[*Figure 8*]

0.00     205.00    410.00 meters

[*Figure 9*]

[*Figure 10*]

[*Figure 11*]

| Time (day) | Case 1 (Baseline) | Case 2 (r=0.45 m) | Case 3 (r=1.1 m) | Case 4 (r=16 m) |
|---|---|---|---|---|
| 365 | 55,000 | 58,168 (5.8%) | 59,856 (8.8%) | 65,435 (19.0%) |
| 3650 | 522,873 | 553,222 (5.8%) | 569,529 (8.9%) | 625,620 (19.7%) |
| 7300 | 1,047,514 | 1,105,521 (5.5%) | 1,136,281 (8.5%) | 1,239,917 (18.4%) |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0026504 A